Europäisches Patentamt

European Patent Office

Office européen des brevets

(19)

(11) Veröffentlichungsnummer: **0 249 046**
**B1**

(12) # EUROPÄISCHE PATENTSCHRIFT

(45) Veröffentlichungstag der Patentschrift: **23.01.91**

(51) Int. Cl.⁵: **B 23 B 3/06**

(21) Anmeldenummer: **87106996.9**

(22) Anmeldetag: **14.05.87**

(54) Drehmaschine.

(30) Priorität: **09.06.86 DE 3618938**

(43) Veröffentlichungstag der Anmeldung:
**16.12.87 Patentblatt 87/51**

(45) Bekanntmachung des Hinweises auf die
Patenterteilung:
**23.01.91 Patentblatt 91/04**

(84) Benannte Vertragsstaaten:
**AT DE FR GB IT**

(56) Entgegenhaltungen:
**DE-A-2 149 461**
**DE-C- 845 592**
**FR-A-1 202 198**
**GB-A-1 554 627**
**US-A-2 470 871**

(73) Patentinhaber: **Maschinenfabrik Ravensburg AG**
**Georgstrasse 24**
**D-7980 Ravensburg (DE)**

(72) Erfinder: **Nussbaumer, Walter**
**Allgäuerstrasse 13**
**D-7980 Ravensburg (DE)**
Erfinder: **Beyrer, Karl-Heinz**
**Ebertstrasse 53**
**D-7980 Ravensburg (DE)**

(74) Vertreter: **Patentanwälte Dipl.-Ing. E. Eisele**
**Dr.-Ing. H. Otten**
**Seestrasse 42**
**D-7980 Ravensburg (DE)**

**Beschreibung**

Die Erfindung betrifft eine Drehmaschine nach dem Oberbegriff des Anspruchs 1.

Die früher aus einem Zwei-Bahnen-Maschinenbett mit Spindelstock zur Werkstückaufnahme, Reitstock als Gegenhalter sowie Support als Werkzeugträger bestehenden Drehmaschinen haben sich heute zu Hochleistungs-Drehmaschinen bzw. Hochleistungs-Bearbeitungszentren weiterentwickelt. Das Zwei-Bahnenbett wurde weiterentwickelt zu einem Drei-Bahnenbett oder Vier-Bahnenbett zur unabhängigen Bewegung des Supports gegenüber der übrigen Drehmaschine. Insbesondere fand eine umfangreiche Weiterentwicklung des Supports als Bearbeitungszentrum bzw. Universal-Werkzeugträger statt, mit eigenen Antriebseinrichtungen für Werkzeugaufnahme bzw. kompletten Bearbeitungseinheiten. Am Support werden demnach neben stehenden Drehwerkzeugen angetriebene Bearbeitungseinheiten zum Schleifen, Fräsen, Bohren befestigt (DE—A1—34 10 276).

Bei diesen bekannten Bearbeitungszentren führt der Support neben der bekannten Querbewegung ($X_1$-Achse) zur Längsachse des Machinenbetts mittels eines Kreuzschlittens auf einem eigenen Bettschlitten (Vier-Bahnenbett) eine eigene Längsbewegung (Z-Achse) parallel zur Längsachse des Machinenbetts aus. Zusätzlich zu dieser Kreuzbewegung in einer Horizontalebene kann der Support eine Bewegung in eine Vertikalachse (Y-Achse) sowie eine Drehbewegung um diese Vertikalachse (B-Achse) ausführen. Mit numerisch gesteuertem Antrieb sind derartige Drehmaschinen als Universal-Bearbeitungsmaschinen einsetzbar.

Bei diesen bekannten Bearbeitungsmaschinen dient der Spindlestock im wesentlichen zur Aufnahme des Werkstücks, wobei die Spindel die Drehbewegung (C-Achse) um die Werkstück-Längsachse durchführt. Hierbei ist es bekannt, die Drehbewegung der Spindel des Spindelstocks in vorgegebenen Winkelschritten vorzunehmen.

Die bekannten Universal-Drehmaschinen haben den Nachteil, daß hiermit zum einen noch nicht alle Möglichkeiten einer optimalen Werkstückbearbeitung ausgeschöpft sind. Zum anderen ist es nachteilig, daß der Support räumliche Bewegungsabläufe übernimmt, für die er nicht unbedingt geeignet ist. Will man beispielsweise am Werkstück einen Kegelmantel herstellen, so kann dies der Support nur dadurch erreichen, daß er stufenweise in der Querrichtung (X-Achse) nach außen fährt. Dabei ist nicht immer gewährleistet, daß das Bearbeitungswerkzeug stets senkrecht zur Bearbeitungsoberfläche steht, d.h. der Berührungswinkel entspricht nicht der Flächennormalen.

Bei den bekannten Universal-Bearbeitungszentren kann es weiterhin von Nachteil sein, daß der geschilderte kompliziert aufgebaute Support als Bearbeitungsturm sehr aufwendig konstruiert sein muß, um die notwendigen räumlichen Bewegungsabläufe durchführen zu können. Dies nicht zuletzt auch in Verbindung mit einer sehr komplizierten numerischen Steuerung. Durch die auf engstem Bauraum angeordneten Führungen der Antriebseinheiten des Supports ist die Genauigkeit der Bearbeitung nur mittels höchster Präzision der Bauteile herstellbar, wobei die Steifigkeit und Stabilität des Systems des Supports Wünsche offen läßt.

Aus der FR—A—1 202 198 ist eine herkömmliche Drehbank bekannt geworden, die ein vom Haupt-Maschinenbett für den Support getrenntes Maschinenbett für den Spindelstock aufweist. Dieses Maschinenbett für den Spindelstock ist um seine senkrechte Symmetrieachse in einer Horizontalebene drehbar gelagert, so daß der Spindelstock eine Drehbewegung um seine vertikale Symmetrieachse gegenüber dem Haupt-Maschinenbett durchführen kann. Dadurch daß der Spindlestock zusätzlich auf seinem Maschinenbett längsverfahrbar ist, kann die verticale Symmetrieachse des Spindelstocks in einem gewissen Abstand zur Drehachse des Maschinenbetts verfahren werden. Hierdurch ergibt sich eine Schwenkbewegung mit gewissem Spielraum.

Diese Anordnung hat jedoch den Nachteil, daß die Schwenkbewegung des Spindelstocks nur in einem kleinen Rahmen durchgeführt werden kann, da sich die Spindel selbst stets zwischen der vertikalen Drehachse und dem Haupt-Maschinenbett befindet. Hierdurch ist der Bewegungsspielraum der Maschine eingeschränkt.

Der Erfindung liegt die Aufgabe zugrunde, die zuvor genannten Nachteile zu beseitigen und insbesondere eine Drehmaschine zu entwickeln, die weitere geeignete Bewegungsabläufe zur räumlichen Bearbeitung von Werkstücken dem Spindelstock durchführen kann.

Die Aufgabe wird ausgehend von einer Drehmaschine gemäß dem Gattungsbegriff durch die kennzeichnenden Merkmale des Anspruchs 1 gelöst.

Vorteilhafte und zweckmäßige Weiterbildungen der erfindungsgemäßen Vorrichtung sind in den Unteransprüchen dargestellt.

Der Erfindung liegt die Erkenntnis zugrunde, daß bei schweren Bearbeitungsmaschinen die bisherige relative Unbeweglichkeit des Spindelstocks mit der bloßen Drehbewegung der Spindel um die C-Achse von Nachteil ist.

Erfindungsgemäß werden deshalb die an sich nur für den Support typischen Bewegungsabläufe teilweise oder ganz auf den Spindelstock selbst übertragen und der Bewegungsbereich durch eine zusätzliche Schwenkbewegung erweitert. Von besonderer Bedeutung hierbei ist deshalb die durchführbare Längsbewegung des Spindelstocks in Richtung der Längsachse des Spindelstock-Machinenbetts (W-Achse). Dieser Längsbewegung wird wahlweise eine Querbewegung in der gleichen Horizontalebene überlagert, wobei die Querbewegung auf einer Geraden ($X_2$-Achse), zum Beispiel mittels eines Kreuzschlittens oder einer gekrümmten Kurve ($B_1$-Achse) als Schwenkbewegung ausgeführt werden kann.

Mit der kombinierten Längsbewegung (W-

Achse) und Schwenkbewegung ($B_1$-Achse) des Spindelstocks in einer Horizontalebene sind eine Reihe von Vorteilen bei der Bearbeitung von Werkstücken verbunden. Will man beispielsweise eine Kegelmantelfläche herstellen, so braucht der Spindelstock lediglich um den Winkel verschwenkt zu werden, den die Kegelmantelfläche mit der Werkstück-Rotationsachse einnimmt. Hierdurch wird die zu bearbeitende Kegelmantelfläche parallel zur Längsachse des Haupt-Maschinenbetts gestellt, so daß der Support lediglich eine Längsbewegung in der Z-Achse, d.h. parallel zur Längsachse des Maschinenbetts, nicht jedoch eine Zustellbewegung in der X-Achse oder Drehbewegung in der $B_2$-Achse durchführen muß. Der Support kann demnach für diese Bearbeitung äußerst einfach aufgebaut sein, wobei eine Steuerung des Supports zur Herstellung der Kegelmantelfläche gänzlich entfällt.

Vorteilhaft hieran ist weiterhin, daß der Anstellwinkel des Schneidwerkzeugs zur Werkstückoberfläche auch bei diesen gekrümmten Flächen stets konstant gehalten werden kann. Dies ist besonders wichtig bei Werkzeugen mit Linienberührung wie zum Beispiel Profilstähle, Schleifscheiben, Rolliereinrichtungen, Fräser, usw. oder beim Einsatz von Meßfühler.

Durch die erfindungsgemäße Verschwenkeinrichtung des Spindelstocks kann aber auch der Support als Werkzeughalter, zum Beispiel für Bohrstangen, Schleifspindeln usw. wesentlich stabiler ausgeführt werden, dadurch den konstanten Berührungswinkel zwischen Werkstück und Werkzeug die zur Verfügung stehende Werkstücköffnung zum Beispiel bei der Innenkonturen-Bearbeitung besser ausgenutzt werden kann.

Gegenüber Drehmaschinen mit Drehscheiben auf dem Support ($B_2$-Achse) hat die vorliegende Erfindung den weiteren Vorteil, daß die Genauigkeit der Bearbeitung wesentlich erhöht wird, da viel mehr Bauraum für Führungen, Abtrieb und Meßsysteme zur Verfügung steht. Hierdurch kann auch eine wesentlich höhere Steifigkeit erzielt werden.

Vorteilhaft ist weiterhin, daß der Antrieb der Führungsbahnen sowie die Meßsysteme zur Durchführung der Bewegung des Spindelstocks außerhalb des Spänebereichs liegen und damit geschont sind.

Da bei der laufenden Bearbeitung von komplizierten Flächen eine ständige Verstellung des Supports durch numerische Steuerung gegebenenfalls entfallen kann, wird die Steifigkeit der gesamten Maschine im geklemmten Zustand der Schwenkachse nicht beeinträchtigt. Innen- und Außenkegel können demnach im Ein-Achsbetrieb äußerst genau hergestellt werden, da außerhalb keine Interpolationsfehler durch gleichzeitiges Verfahren von Zwei-Achsen wie beim herkömmlichen System auftreten. Hierdurch können auch die Bearbeitungseinheiten wie Schleifeinheiten, Bohranlagen usw. stabiler ausgeführt werden, da sie durch den Platzbedarf einer Schwenkachse am Support nicht mehr beeinträchtigt werden.

Der Support kann demnach je nach Anwendungsfalls auch zur Herstellung sehr komplizierter Teile sehr einfach ausgebildet sein, wobei eine einfach Steuereinheit genügt. Selbstverständlich kann der Support jedoch auch in komplizierten Ausführungsformen als Universal-Werkzeugträger mit Aufnahmevorrichtungen zur lösbaren Befestigung von Werkzeugen oder antreibbaren Bearbeitungseinheiten mit numerischer Steuerung ausgebildet sein.

Zur Herstellung komplizierter Formgebungen wie parabolische Flächen, Hyperbelfläche und ähnlichem, kann die Schwenkbewegung sowie die Längs- und/oder Querbewegungen des Spindelstocks ebenfalls numerisch gesteuert ausgeführt sein. Hierzu werden die benötigten Kurvenfunktionen auf die Zustellbewegung der einzelnen Achsen des Spindelstocks übertragen. Hierdurch können beispielsweise hochgenaue parabolische Körper aus Keramik, Glas, Kunststoff oder hochfesten Stählen geschliffen werden, wobei ein stets konstanter Anstellwinkel des Bearbeitungswerkzeugs zum Werkstück gewährleistet ist.

Die Erfindung hat weiterhin den Vorteil, daß eine höhere Dynamik des Supports erreichbar ist, sofern der Schwenkantrieb nicht auf dem Support angeordnet ist und daher nicht mitbeschleunigt oder abgebremst werden muß.

Vorteilhaft ist auch, daß bestehende Fluchtfehler zwischen dem Spindelstock und dem Reitstock mittels Software leicht korrigiert werden können, so daß keine mechanische Abstimmarbeiten notwendig sind.

Die erfindungsgemäße Drehmaschine wird vorzugsweise als Universal-Drehmaschine mit einem Support als Bearbeitungszentrum verwendet, wobei Frässtationen, Innen- und Außenschleifstationen, Bohrstationen zusätzlich zur Drehbearbeitung vorgesehen sind. Darüber hinaus können auch in vorteilhafter Weise diverse Meßstationen zur Werkstückvermessung angebracht werden.

Wie in vorteilhafter Ausgestaltung der Erfindung in den Unteransprüchen angegeben, kann die Schwenkeinrichtung des Spindelstocks auf verschiedene Weise ausgebildet sein.

Als erste Schwenkmöglichkeit wird die Schwenkbewegung des gesamten Spindelstocks um eine vertikale Schwenkachse gesehen, die vorzugsweise in einem deutlichen Abstand vom Schwerpunkt S des Spindelstocks entfernt liegt. Bei großen Bearbeitungsmaschinen kann dieser Abstand zwischen einem Meter und drei Meter betragen. Hierdurch gibt sich ein großer Hebelarm mit einer entsprechende genau einstellbaren Verstellmöglichkeit des Schwenkantriebs. Dieser Abstand kann jedoch auch klein sein.

Alternativ oder ergänzend hierzu kann die Schwenkbewegung des Spindelstocks als Drehbewegung ausgebildet sein und derart erfolgen, daß die vertikale Drehachse durch den Schwerpunkt des Spindelstocks führt oder im Bereich dieses Schwerpunkts liegt. Diese Drehbewegung ist beispielsweise mittels eines Drehtellers unterhalb des Spindelstocks möglich. Dies entspricht beispielsweise einer Übertragung der bekannten Bewegungsabläufe beim Support auf den Spindelstock, jedoch mit den damit verbundenen überraschenden Ergebnissen.

In kompliziertester Ausführung kann der Spindelstock demnach mittels eines Kreuzschlittens Bewegungsabläufe in Richtung zur Längsachse der Maschinenbetts (W-Achse) und quer hierzu ($X_2$-Achse) durchführen sowie mittels eines auf dem Kreuztisch angeordneten Drehtellers eine Drehbewegung ($B_1'$-Achse) durchführen. Über die zusätzliche Schwenkachse im Abstand vom Spindelstock-Schwerpunkt kann darüber hinaus eine Schwenkbewegung mit großem Schwenkradius und damit großem Schwenkwinkel erfolgen ($B_1$-Achse).

Weitere Vorteile ergeben sich aus den vorteilhaften Ausgestaltungen der erfingungsgemäßen Drehmaschine nach den Unteransprüchen.

Ausführungsbeispiele der Erfindung sind in der Zeichnung dargestellt und mit Angabe weiterer Vorteile in der Beschreibung näher erläutert. Es zeigen

Fig. 1 eine perspektivische Darstellung einer erfindungsgemäßen Drehmaschine mit der Angabe möglichst vieler durchführbarer Funktionen zur Darstellung des Prinzips,

Fig. 2 eine Draufsicht auf eine vereinfachte Ausführungsform einer Drehmaschine mit Zwei-Bahnenbett nach dem erfindungsgemäßen Prinzip und

Fig. 3 eine Universal-Drehmaschine nach dem erfindungsgemäßen Prinzip mit Vier-Bahnenbett und Universal-Bearbeitungs-Support in Draufsicht.

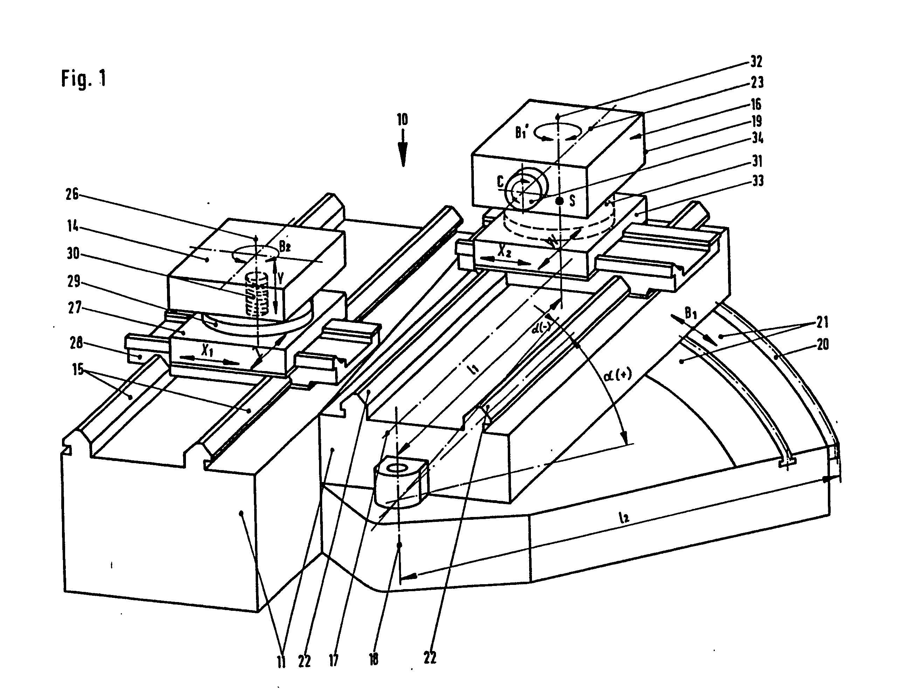

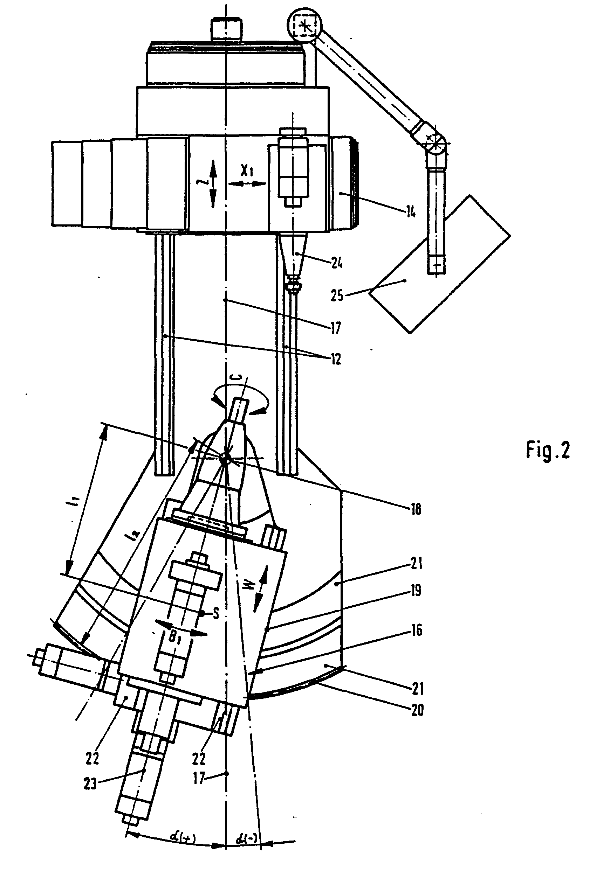

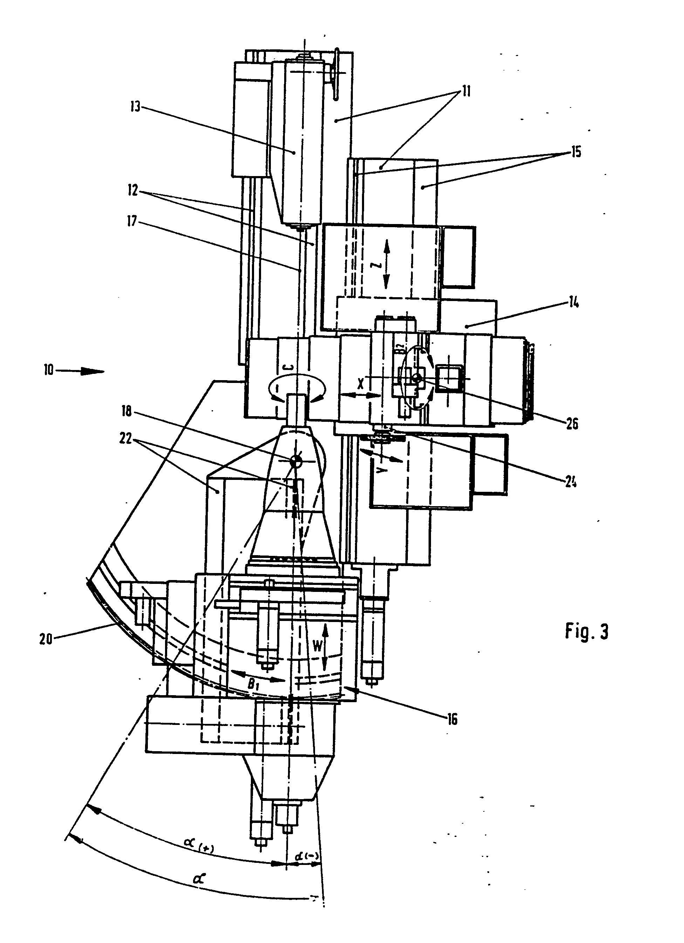

Die in den Figuren 1 und 3 dargestellte Drehmaschine (10) ist als Universal-Bearbeitungsmaschine ausgebildet, mit einem bekannten Vier-Bahnenbett (11). Das in der Fig. 2 und 3 in Draufsicht dargestellt Haupt-Maschinenbett (12) dient zur Aufnahme des Reitstocks (13) bzw. in vereinfachter Ausführungsform in Fig. 2 zur Aufnahme des Supports (14) beim Zwei-Bahnenbett. Beim Vier -Bahnenbett dient das Neben-Maschinenbett (15) zur Aufnahme des unabhängig vom Haupt-Maschinenbett verfahrbaren Supports (14).

In erster alternativer Ausführungsform besteht die erfindungsgemäße Besonderheit darin, daß der gesamte Spindelstock (16) gegenüber dem Haupt-Maschinenbett (12) losgelöst und gegenüber dessen Längsachse (17) schwenkbar ($B_1$-achse) sowie in Richtung der eigenen Längsachse (23) längsverfahrbar (W-Achse) ausgeführt ist. In den Figuren 1 bis 3 ist diese Alternativlösung dargestellt. Gemäß dieser ersten Alternative wird die Schwenkbewegung um den Winkel α um eine vertikale Schwenkachse (18) ausgeführt, die sich in einem Abstand $l_1 \gg$ Null vom Schwerpunkt S des Spindelstocks (16) bzw. des Spindelkastens (19) befindet. Dieser Abstand $l_1$ liegt je nach Maschinentyp in der Größenordnung von einem Meter bis drei Meter. Es wird demnach der gesamte Spindelstock (16) gegenüber der Längsachse (17) des Haupt-Maschinenbetts nach außen geschwenkt. Hierzu dient der Zahnstangenantrieb (20) mit Führungen (21). Um den Spindelstock (16) gegenüber dem Haupt-Maschinenbett (12) schwenken zu können, muß der gesamte Spindelstock demnach losgelöst sein vom Haupt-Maschinenbett (12), wie aus den Figuren 2 und 3 besonders deutlich erkennbar. Der Spindelstock (16) hat ein eigenes Spindelstock-Maschinenbett (22) auf welchem der Spindelkasten (19) in Richtung der Längsachse (W-Achse) des Spindelstocks verfahrbar ist. Nur wenn α=Null ist, fluchtet die Längsachse des Spindelstocks (23) mit der Längsachse (17) des Haupt-Maschinenbetts, wie in Fig. 3 dargestellt.

Die Auslenkung des Spindelstocks (16) gegenüber der Null-Stellung, beträgt bei der Schwenkung um die vertikale Schwenkachse (18) $\alpha \approx -5°$ bis +30°. Der Spindelstock (16) kann in der Darstellung in Fig. 1 um ca. 30° im Uhrzeigersinn und ca. 5° entgegengesetzt dem Uhrzeigersinn aus der Null-Lage herausgeschwenkt werden, wobei die Null-Lage durch fluchtende Längsachsen (17 und 23) des Haupt-Maschinenbetts und des Spindelstocks gekennzeichnet ist. Diese Schwenkbewegung ist in den Figuren mit $\alpha_{(+)}$ und $\alpha_{(-)}$ schematisch dargestellt. Die Schwenkbewegung um die vertikale Schwenkachse (18) ist als $B_1$-Achse gekennzeichnet. Durch den langen Hebelarm $l_2$ zwischen Schwenkachse (18) und Schwenkantrieb (20) kann eine besonders exakte und spielfreie Spindelführung erzielt werden. Dabei erfolgt diese horizontale Schwenkbewegung des Spindelstocks mittels eines an sich bekannten vorgespannten Zahnradgetriebes mit automatischem Zahnspielausgleich, der auf den Zahnstangenantrieb (20) einwirkt. Diese Technik ist beispielsweise bekannt aus der Literaturstelle Siemens, Elektrische Vorschubantriebe für Werkzeugmaschinen, Verlag Siemens AG 1981, Seite 236 ff.

Die zuvor beschriebene Ausführungsform ist prinzipiell in Fig. 1 und in alternativen Ausführungsformen in den Figuren 2 und 3 dargestellt, wobei die Fig. 2 ein Zwei-Bahnenbett und die Fig. 3 ein Drei Bahnenbett zeigt. Grundsätzlich ist bei beiden Konstruktionen der Spindelstock (16) um die Vertikalachse (18) schwenkbar um die sogenannte B-Achse und längsverfahrbar (W-Achse) gelagert. Dabei zeigt die Fig. 2 eine ausgelenkte Stellung des Spindelstocks (16) um den Winkel $\alpha_{(+)}$ gegenüber der fluchtenden Längsachse (17) des Haupt-Maschinenbetts (12) bzw. der Nullage des Spindelstocks.

In stark vereinfachter Ausführungsform der Erfindung kann auf die axiale Eigenbewegung des Spindelstocks (16) (W-Achse) in Sonderfällen verzichtet werden, d.h. es wird lediglich die erfindungsgemäße Schwenkbewegung des Spindelstocks (16) durchgeführt, während der Support (14) auf dem Haupt-Maschinenbett (12) die Längsbewegung (Z-Achse) sowie die Querbewegung bzw. Vorschubbewegung ($X_1$-Achse) durchführt.

In den Figuren 2 und 3 ist prinzipiell der gleiche Aufbau des Spindelstocks (16) dargestellt, d.h. die Schwenkbewegung erfolgt um die Vertikalachse (18) ($B_1$-Achse), die Längsbewegung auf dem von Haupt-Maschinenbett (12) getrennt ausgeführten Spindelstock-Maschinenbett (22) entlang der W-Achse. Weiterhin dargestellt sind der Zahnstange-

nantrieb (21) im Abstand $l_2$ von der Schwenkachse (18) sowie eine Führung (21).

Neben dem Haupt-Maschinenbett (12) enthält die Ausführungsform nach Fig. 3 ebenso wie in Fig. 1 ein Neben-Maschinenbett (15) für den Support (14). In Fig. 3 ist dieser Support als Universal-Bearbeitungsturm ausgebildet, mit Aufnahmevorrichtungen zur lösbaren Befestigung von Werkzeugen oder antreibbaren Bearbeitungseinheiten. Als Beispiel für eine Bearbeitungseinheit (24) ist ein Schleifeinheit dargestellt. Die Bewegungsrichtung des Supports ist durch die Z-Achse parallel zur Längsachse (17) des Haupt-Machinenbetts (12) und die Querrichtung hierzu durch die $X_1$-Achse dargestellt. Zusätzlich kann der Support noch eine Drehbewegung um eine vertikale Drehachse (26) durchführen, was als $B_2$-Achse gekennzeichnet ist. Die Höhenverstellbarkeit in Richtung der vertikalen Drehachse (26) ist als "Y-Achse" bezeichnet. Diese Bewegungsrichtungen und Freiheitsgrade sind in der Fig. 1 in der entsprechenden Support-Darstellung ebenfalls wiedergegeben. Dabei übernimmt die Bewegung in der Horizontalebene (Z- und $X_1$-Achse) ein Kreuzschlitten (27) oder Werkzeugschlitten, der auf einem Planschlitten (28) bzw. dem Maschinenbett (15) läuft. Die Drehbewegung um die $B_2$-Achse übernimmt ein Drehteller (29) während die Bewegung in der Y-Achse, d.h. in Richtung der vertikalen Drehachse (26), eine Hubvorrichtung (30) in an sich bekannter Weise übernimmt.

In Fig. 2 ist ein vereinfachter Support (14) mit Schleifeinheit (24) und numerischer Steuereinheit (25) dargestellt.

Als Alternativ-Ausführung oder ergänzende Ausführung zu den bisher dargestellten Ausführungsformen, insbesondere den Ausführungsformen nach Fig. 2 und 3, ist in Fig. 1 eine Möglichkeit zur Herstellung der Drehbewegung des Spindelstocks (16) über einen separaten Drehteller (31) dargestellt, wobei die Drehachse (32) durch den Schwerpunkt S oder im Bereich dieses Schwerpunktes S des Spindelkastens geführt wird. Hierdurch kann der Spindelkasten (19) eine ähnliche Drehbewegung durchführen, wie sie der Support durch den Drehteller (29) durchführt. In besonderen Anwendungsfällen kann diese Drehbewegung eine durchaus sinnvolle Ergänzung zur Schwenkbewegung um die Schwenkachse (18) sein. Sie kann in besonderer Ausführung der erfindungsgemäßen Vorrichtung auch allein vorhanden sein. Die eingangs erwähnten Vorteile können mit dieser Dreheinrichtung ($B_1'$-Achse) zum Teil ebenfalls erzielt werden.

Die Erfindung gemäß der Darstellung nach Fig. 1 sieht weiterhin vor, daß neben der Längsbewegung in Richtung der W-Achse eine Querbewegung des Spindelstocks hierzu möglich ist ($X_2$-Achse). Dies wird durch einen separaten Kreuztisch (33) erreicht, der dem Spindelstock eine Beweglichkeit vermittelt, wie es an sich bisher nur vom Support bekannt ist.

In den Figuren 1 bis 3 ist die Drehbewegung der Spindel mit der C-Achse dargestellt. Hierbei kann die Drehbewegung als Schrittsteuerung mit der Einstellung jedes beliebigen Winkels oder Winkelbereiche ausgeführt sein.

Die Ausführungsform der Erfindung nach Fig. 1 stellt die Vielzahl der erfindungsgemäßen Möglichkeiten insgesamt und prinzipiell dar. Dabei ist es maßgeblich, daß neben der bekannten Beweglichkeit des Supports als Universal-Bearbeitungszentrum mit den Bewegungsachsen $X_1$, Z, $B_2$ sowie Y auch der Spindelstock eine völlig eigenständige Bewegung in Richtung der Achsen W, $X_2$ und der Schwenkbewegung $B_1$, $B_1'$ durchführen kann. Hinzu kommt die Drehbewegung der Spindel (34) selbst, d.h. die C-Achse.

Diese Gesamtheit der Bewegungen können je nach Anwendungsfall in mehr oder weniger starkem Umfang vorhanden sein.

Insbesondere wird im allgemeinen nur die Schwenkvorrichtung um die Schwenkachse (18) oder die Drehvorrichtung mittels Drehteller (31) vorhanden sein. Dies ist durch die gestrichelte Darstellung des Drehtellers (31) angedeutet. Maßgeblich für die Beweglichkeit des Spindelstocks ist vor allem die Schwenkbewegung um die $B_1$-Achse sowie die Längsbewegung entlang der W-Achse entlang des Spindelstock-Maschinenbetts (22). Hinzu treten können die weitere Querbewegung zur W-Achse entlang der $X_2$-Achse sowie alternativ oder ergänzend die Drehbewegung um die $B_1'$-Achse.

Ergänzend sei angemerkt, daß die Lagerung der Hauptspindle des Spindelstocks hydrostatisch oder aerostatisch erfolgt. Dabei werden vorwiegend für jeden Bewegungsablauf separate Antriebe verwendet, um auf entstehende Ungenauigkeiten bei Getriebeschaltungen zu verzichten.

**Patentansprüche**

1. Drehmaschine mit einem Zwei-, Drei- oder Vier-Bahnenbett (15, 22), einem Spindelstock (16) mit Antriebseinrichtung für eine Werkstückaufnahme und einem, als Kreuzschlitten bzw. Bearbeitungsturm ausgebildeten Support (14) zur Aufnahme von Werkzeugen oder antreibbaren Bearbeitungseinheiten, wobei der Spindelstock (16) auf einem eigenen Spindelstock-Maschinenbett (22) zur Durchführung einer Längsbewegung (W-Achse) verfahrbar und um eine vertikale Schwenk- oder Drehachse (18, 32) ($B_1$-Achse, $B_1'$-Achse) schwenk- oder drehbar gelagert ist, dadurch gekennzeichnet, daß der Spindelstock (16) und das ganze, den Spindelstock (16) tragende Spindelstock-Maschinenbett (22) in auf einer gekrümmten Bahn verlaufenden Schwenkbewegung ($B_1$-Achse) verfahrbar ist, wobei die vertikale Schwenkachse (18) in einem Abstand $l_1$, vom Schwerpunkt S des Spindelstocks (16) derart entfernt angeordnet ist, daß die Spindel (34) für die Werkstückaufnahme hinter der vertikalen Schwenkachse (18) des Spindelstock-Maschinenbetts (22) liegt und wobei die zugehörige Schwenkbewegung ($B_1$-Achse) numerisch gesteuert ist.

2. Drehmaschine nach Anspruch 1, dadurch gekennzeichnet, daß die Bewegungsachsen des Supports (14) ($X_1$-, Y-, Z-, $B_2$-Achse) und die weiteren Bewegungsachsen des Spindelstocks (16) (C-, W-Achse) numerisch gesteuert sind.

3. Drehmaschine nach Anspruch 1, dadurch gekennzeichnet, daß zur Durchführung einer zusätzlichen Drehbewegung des Spindelstocks (16) ($B_1'$-Achse) eine vertikale Drehachse (32) durch den Schwerpunkt S des Spindelstocks (16) vorgesehen ist.

4. Drehmaschine nach Anspruch 3, dadurch gekennzeichnet, daß die horizontale Drehbewegung des Spindelstocks (16) um die vertikale Drehachse (32) ($B_1'$-Achse) im Bereich des Spindelstock-Schwerpunkts S ($l_1 \pm$Null) mittels eines Drehtellers (31) unterhalb des Spindelkastens (19) erfolgt.

5. Drehmaschine nach einem der mehreren der Ansprüche 1 bis 4, dadurch gekennzeichnet, daß der Spindelstock (16) auf einem Kreuzschlitten (33) zur Durchführung einer Längsbewegung (W-Achse) in Richtung der Längsachse (23) des Spindelstock-Maschinenbetts (22) und in Querrichtung hierzu ($X_2$-Achse) gelagert ist.

6. Drehmaschine nach Anspruch 1, dadurch gekennzeichnet, daß die Spindel (34) des Spindelstocks (16) einen Teilachs-Antrieb zur beliebigen Einstellung des Rotationswinkels (C-Achse) aufweist.

7. Drehmaschine nach einem oder mehreren der vorhergehenden Ansprüche, dadurch gekennzeichnet, daß der Antrieb zur Durchführung der horizontalen Schwenkbewegung ($B_1$-Achse) des Spindelstocks (16) mittels eines vorgespannten Zahnradgetriebes (20) mit automatischem Zahnspielausgleich erfolgt, insbesondere mittels eines Zahnstangenantriebs (20).

8. Drehmaschine nach einem oder mehreren der vorhergehenden Ansprüche 1 bis 7, dadurch gekennzeichnet, daß der Spindelantrieb für den Spindelstock durch direkten Motorantrieb ohne Zwischenschaltung eines Zahnradgetriebes erfolgt.

9. Drehmaschine nach einem oder mehreren der vorhergehenden Ansprüche, dadurch gekennzeichnet, daß der Support (14) auf einem Vier-Bahnenbett angeordnet und als Universal-Bearbeitungsstation ausgebildet ist, mit Support-Kreuzschlitten (27) (Z-, $X_1$-Achse), Support-Drehteller (29) ($B_2$-Achse), Support-Höhenverstelleinrichtung (30) (Y-Achse) sowie wenigstens einer Aufnahmevorrichtung zur lösbaren Befestigung von Werkzeugen oder antreibbaren Bearbeitungseinheiten (24) zum Drehen, Schleifen, Fräsen, Bohren oder Messen.

10. Drehmaschine nach einem der mehreren der vorhergehenden Ansprüche, dadurch gekennzeichnet, daß der Schwenkwinkel des Spindelstocks (16) zur Auslenkung gegenüber der Längsachse (17) des Haupt-Maschinenbetts $\alpha \approx -10°$ bis $+90°$, insbesondere $\alpha \approx -5°$ bis $+30°$ beträgt.

11. Drehmaschine nach Anspruch 1, dadurch gekennzeichnet, daß der Abstand $l_1$ der Schwenkachse (18) vom Schwerpunkt S des Spindelstocks (16) $l_1 \approx 100$ bis 300 cm, insbesondere $l_1 \approx 200$ cm beträgt.

**Revendications**

1. Machine-outil, comportant un banc à deux, trois ou quatre voies (15, 22), une poupée (16) ayant un dispositif d'entraînement pour la réception de pièce, et un support (14) réalisé en tant que chariot à croix ou tour d'usinage, pour recevoir des outils ou des unités d'usinage pouvant être entraînées, la poupée (16) étant montée mobile sur un banc propre (22) pour effectuer un mouvement longitudinal (axe W), et montée rotative ou pivotante autour d'un axe vertical de rotation ou de pivotement (18, 22) (axe $B_1$, axe $B_1'$), caractérisée en ce que la poupée (16) et l'ensemble du banc (22) portant la poupée (16) sont déplaçables en un mouvement de pivotement (axe $B_1$) s'étendant sur une voie courbe, l'axe de pivotement vertical (18) étant agencé de façon éloignée d'une distance $l_1$ du centre de gravité S de la poupée (16), de sorte que la broche (34) pour la réception de pièce se trouve derrière l'axe de pivotement vertical (18) du banc (22) de la poupée, le mouvement de pivotement correspondant (axe $B_1$) étant commandé de façon numérique.

2. Machine-outil selon la revendication 1, caractérisée en ce que les axes de mouvement du support (14) (axes $X_1$, Y, Z, $B_2$) et les autres axes de mouvement de la poupée (16) (axes C, W) sont commandés de façon numérique.

3. Machine-outil selon la revendication 1, caractérisée en ce que, pour effectuer un mouvement de rotation supplémentaire de la poupée (16) (axe $B_1'$), on prévoit un axe de rotation vertical (32) passant par le centre de gravité S de la poupée (16).

4. Machine-outil selon la revendication 3, caractérisée en ce que le mouvement de rotation horizontal de la poupée (16) a lieu autour de l'axe de rotation vertical (32) (axe $B_1'$) dans la zone de centre de gravité S de la poupée ($l_1 \approx 0$) au moyen d'un plateau tournant (31) au-dessous de la boîte à broche (19).

5. Machine-outil selon une ou plusieurs des revendications 1 à 4, caractérisée en ce que la poupée (16) est montée sur un chariot à croix (33) pour effectuer un mouvement longitudinal (axe W) en direction de l'axe longitudinal (23) du banc (22) de la poupée et en direction transversale à celui-ci (axe $X_2$).

6. Machine-outil selon la revendication 1, caractérisée en ce que la broche (34) de la poupée (16) présente un entraînement d'axe partiel pour le réglage quelconque de l'angle de rotation (axe C).

7. Machine-outil selon une ou plusieurs des revendications précédentes, caractérisée en ce que l'entraînement pour effectuer le mouvement de pivotement horizontal (axe $B_1$) de la poupée (16) a lieu au moyen d'un engrenage précontraint (20) à compensation automatique du jeu des dents, en particulier au moyen d'un engrenage à crémaillère (20).

8. Machine-outil selon une ou plusieurs des revendications précédentes 1 à 7, caractérisée en ce que l'entraînement de la broche pour la poupée a lieu par entraînement motorisé direct sans l'intermédiaire d'un engrenage.

9. Machine-outil selon une ou plusieurs des revendications précédentes, caractérisée en ce que le support (14) est agencé sur un banc à quatre voies et est réalisé en tant que poste d'usinage universel, ayant un chariot à croix (27) (axe Z, $X_1$), un plateau tournant (29) (axe $B_2$), un dispositif de réglage en hauteur (30) (axe Y), ainsi qu'au moins un dispositif de réception pour la fixation amovible d'outils ou d'unités d'usinage entraînables (24), pour tourner, rectifier, fraiser, percer ou mesurer.

10. Machine-outil selon une ou plusieurs des revendications précédentes, caractérisée en ce que l'ange de pivotement de la poupée (16) pour la déviation par rapport à l'axe longitudinal (17) du banc principal est α≈−10° à +90°, en particulier α≈−5° à +30°.

11. Machine-outil selon la revendication 1, caractérisée en ce que la distance $l_1$ de l'axe de pivotement (18) du centre de gravité S de la poupée (16) est $l_1$≈100 à 300 cm, en particulier $l_1$≈200 cm.

**Claims**

1. A lathe with a two, three or four-path bed (15, 22), a headstock (16) with driving arrangement for a workpiece holder and a support (14) designed as a compound slide rest or as a tooling turret to hold tools or drivable tooling units, the headstock (16) being mounted drivable on its own headstock lathe bed (22) to perform a longitudinal movement (W-axis) and pivotally or rotatably mounted about a vertical pivotal or swivelling axis (18, 32) ($B_1$-axis, $B_1$'-axis), characterized in that the head stock (16) and the entire headstock lathe bed (22) supporting the headstock (16) is movable in a swivelling movement ($B_1$-axis) proceeding along a curved path, the vertical swivelling axis (18) being mounted distant from the centre of gravity S of the headstock (16) by a distance $l_1$ such that the spindle (34) for holding the workpiece is situated behind the vertical swivelling axis (18) of the headstock lathe bed (22) and the associated swivelling movement ($B_1$-axis) being numerically controlled.

2. A lathe according to claim 1, characterized in that the axes of movement of the support (14) ($X_1$, Y-, Z-, $B_2$-axis) and the further axes of movement of the headstock (16) (C-, W-axis) are numerically controlled.

3. A lathe according to claim 1, characterized in that, for the performance of an additional swivelling movement of the headstock (16) ($B_1$'-axis) provision is made for a vertical swivelling axis (32) through the centre of gravity (S) of the Headstock (16).

4. A lathe according to claim 3, characterized in that the horizontal swivelling movement of the headstock (16) about the vertical swivelling axis (32) ($B_1$'-axis) is performed in the region of the centre of gravity S of the head stock ($l_1$≈nil) by means of a rotary plate (31) under the headstock housing (19).

5. A lathe according to one or more of claims 1 to 4, characterized in that the headstock (16) is mounted on a compound slide rest (33) to perform a longitudinal movement (W-axis) in the direction of the longitudinal axis (23) of the headstock lathe bed (22) and in a transversal direction thereto ($X_2$-axis).

6. A lathe according to claim 1, characterized in that the spindle (34) of the headstock (16) has a partial axis drive for any desired setting of the angle of rotation (C-axis).

7. A lathe according to one or more of the foregoing claims, characterized in that the drive for performing the horizontal swivelling movement ($B_1$-axis) of the headstock (16) is effected by means of a biased toothed gearing (20) with automatic tooth play compensation, particularly by means of a rack drive (20).

8. A lathe according to one or more of foregoing claims 1 to 7, characterized in that the spindle drive for the headstock is effected by direct motor drive without the intervention of toothed gearing.

9. A lathe according to one or more of the foregoing claims, characterized in that the support (14) is mounted on a four-path bed and is constructed as a universal tooling station, with support compound slide rest (27) (Z-, $X_1$-axis), support rotary plate (29) ($B_2$-axis), support height adjustment device (30) (y-axis) as well as at least a holding device for the detachable securing of tools or drivable working units (24) for turning, grinding, milling, drilling or measuring.

10. A lathe according to one or more of the foregoing claims, characterized in that the swivelling angle of the headstock (16) relative to the deflection from the longitudinal axis (17) of the main lathe bed is α≈−10° to +90°, particulary α≈−5° to +30°.

11. A lathe according to claim 1, characterized in that the distance $l_1$ of the swivelling axis (18) from the centre of gravity S of the head stock (16) is $l_1$≈100 to 300 cm, particularly $l_1$≈200 cm.

**Fig. 1**

EP 0 249 046 B1

Fig.2

Fig. 3